# EUROPEAN PATENT APPLICATION

(11) **EP 4 303 150 A1**
(43) Date of publication of application: **10.01.2024**
(21) Application number: 22183488.0
(22) Date of filing: 07.07.2022
(51) Int. Cl.: B65D 83/00, G01N 35/00, G01N 35/10

(54) **DISPENSER DEVICE, LABORATORY SYSTEM COMPRISING THE DISPENSER DEVICE, AND METHOD INVOLVING THE USE OF THE DISPENSER DEVICE**

(71) Applicant: Mettler-Toledo GmbH, 8606 Greifensee (CH)
(72) Inventor: ZEHNDER, Marc, 8610 Uster (CH); DONZÈ, Joel, 8614 Sulzbach (CH); ROTACH, Hansjörg, 8604 Volketswil (CH)
(74) Representative: Mettler-Toledo

(57) **Abstract**

Disclosed is a dispenser device (1), comprising a body (10), at least one dispensing tip (13) extending from a distal side of the body (10) and a bulk reservoir (20) which is provided on a proximal side of the dispenser device. A slider (30) is slidably received inside and guided by a guide channel (12). A feed channel (11) is provided inside the body and extends from the bulk reservoir to the guide channel. A dispensing channel (14) extends through the dispensing tip from the guide channel to a distal end of the dispensing tip. The feed channel and the dispensing channel are offset by an offset distance (B) along an axis (121) of the guide channel. The slider is displaceable inside the guide channel in a motion range which allows a through passage (31) of the shifter to be selectively aligned with either one of the feed channel and the dispensing channel. The dispenser device serves to dispense objects form the bulk reservoir individually from the dispensing tip.

## Description

### Technical Field

The present disclosure relates to a dispenser device as set forth in the claims. Further disclosed are a laboratory system comprising the dispenser device and a method involving the use of the dispenser device

### Background Art

In certain applications sample containers comprising samples are processed inside a glovebox. Processing the samples includes stirring the samples with magnetic stirrer bars which need to be inserted into the glass containers. Given the size of the glass containers, the size of the stirrers may only be in the order of some millimetres. It is apparent that those small stirrer bars may not be gripped and manipulated with gloves inside the glove box. The operator may thus grip the bars with a tweezer to place them into the sample containers, wherein the tweezer, in turn, is manipulated with the gloves. Each stirrer bar needs to be placed individually, while precise handling of the small stirrer bars wearing the gloves turns out to be a tricky task.

### Summary of invention

It is an object of the present disclosure to suggest a dispenser device of the kind initially mentioned. In one aspect it aims at improving the art. In a more specific aspect the presently disclosed subject matter aims at overcoming drawbacks of the art and in particular the drawbacks mentioned above. In even more specific aspects placing magnetic stirrer bars into sample containers shall be facilitated and expedited.

This is achieved by the subject matter described in claim 1.

Further effects and advantages of the disclosed subject matter, whether explicitly mentioned or not, will become apparent in view of the disclosure provided below.

(1) Accordingly, disclosed is a dispenser device, comprising a body wherein at least one feed channel is provided inside the body. The at least one feed channel has a proximal end and a distal end, wherein the proximal end opens into a bulk reservoir on a proximal side of the dispenser device and wherein the distal end opens into a guide channel. The guide channel has an axis extending transversely with respect to the at least one feed channel. Said axis is in particular a longitudinal axis of the guide channel. It is implicit from the above that the axis of the guide channel cannot extend parallel to a feed channel, or an axis thereof, respectively. In embodiments, the axis of the guide channel may be perpendicular to at least one of the feed channels, and/or the axis thereof, respectively. It may further be provided that the axis of the guide channel crosses the axis of at least one of the feed channels, or in embodiments, all feed channels. The dispenser device further comprises at least one dispensing tip extending from a distal side of the body, wherein the at least one dispensing tip has a dispensing channel extending at least essentially parallel to a feed channel. "A feed channel" shall in the present context be understood equivalent to "at least one of the at least one feed channel". This is to say that the dispensing channel of a dispensing tip extends parallel to at least one of the at least one feed channel. The dispensing channel is further laterally offset from said at least one feed channel, or, in embodiments, from each feed channel, along the axis of the guide channel. The dispensing channel opens into the guide channel, at a proximal end of the dispensing channel, and is open at a distal end of the dispensing tip. At least one dispensing tip is associated with a feed channel. In particular embodiments each dispensing tip is associated with a feed channel, and more in particular it may be provided that each feed channel is associated with a dispensing tip, or each dispensing tip is associated with a feed channel and each feed channel is associated with a dispensing tip. The dispensing channel of an associated dispensing tip associated with a feed channel extends parallel to and is laterally offset from the respective feed channel along the axis of the guide channel by an offset distance. In particular, for a multitude of feed channels with associated dispensing tips, the offset distance by which the dispensing channel of the associated dispensing tip is laterally offset from the feed channel may be equal for each pair of a feed channel and the associated dispensing tip. In a more particular aspect, a dispensing channel of an associated dispensing tip may moreover be a dispensing channel neighbouring the respective feed channel and closest to the respective feed channel in one direction along the axis of the guide channel. "Neighbouring" and "closest to" may in this context be understood as relating to an distance measured along the axes of the feed channel. The offset distance between a feed channel and the dispensing channel of a respective associated dispensing tip may be measured between axes of said channels. A slider is slidably received inside and guided within the guide channel, wherein the slider comprises at least one through passage. A first through passage is parallel to a first feed channel and to the dispensing channel of a first dispensing tip associated with the first feed channel. It should be noted that in embodiments only one single feed channel and/or dispensing tip may be provided, such that said first feed channel and first dispensing tip might be the only feed channel and/or dispensing tip, respectively. The slider is configured to allow a sliding movement along the axis of the guide channel in a motion range including a first position inside the guide channel in which the first through passage is aligned with said first feed channel and a second position inside the guide channel in which the first through passage is aligned with the first dispensing channel. It is understood in this context that the motion range of the slider generally is an axial motion range along the axis of the guide channel. In another aspect, a dispensing tip may be qualified as a dispensing tip associated with a particular feed channel if the lateral offset between said feed channel and the dispensing channel of said dispensing tip is within the motion range of the slider, or, still from another point of view, if the slider can be positioned in a first position inside the guide channel in which a first through passage is aligned with said feed channel and in a second position inside the guide channel in which the first through passage is aligned with the dispensing channel of said dispensing tip. This definition is particularly useful if the first and second positions are end positions of the motion range of the slider, as set forth below.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of". It is moreover noted that in the context of the present application the terms "bordering" and "adjacent" as well as "bordering" and "adjacent to" are considered as synonyms.

The function of the dispenser device essentially is as follows: In the intended use, the dispenser device is held or positioned with the dispensing tips positioned at the bottom of the device while the bulk reservoir is positioned at the top of the device. It is intended that the bulk reservoir contains objects having a cross-sectional dimension not exceeding that of the feed channels. Such object would be gravitationally conveyed, or fall, into the feed channel or into the feed channels. With the slider in the first position, i.e., a through passage of the slider aligned with a feed channel, an object would be gravitationally conveyed from the feed channel into the through passage. Upon displacing the slider into the second position, the object inside the through passage of the slider is displaced along the axis of the guide channel. Upon reaching the second position, a through passage containing an object would be aligned with a dispensing channel of a dispensing tip and fall from the through passage of the slider through the dispensing channel and leave the dispensing device at the bottom of a dispensing tip. The skilled person will appreciate that the cross section and geometry of a thus cooperating feed channel, through passage of the slider and dispensing channel must be adapted to each other and to the geometry of the object to be dispensed. For one instance, it might be the case that a cooperating feed channel, through passage of the slider and dispensing channel have all an at least essentially circular cross section and have at least approximately identical diameters. Said diameters, or minimum diameters if the diameter varies along the longitudinal extent, of the cooperating channels and passages differ for one instance by not more than 10 % or not more than 5 % of the smallest diameter. If the length of the duct inside the slider is chosen in a particular relation to the size of the object to be dispensed, one single object will be contained inside the duct of the slider and be dispensed at one time. The device in this respect not only serves as a dispensing device for objects, but also for singling the objects contained in the bulk reservoir.

For an instance, as indicated above, the device may be intended for dispensing cylindrical magnetic stirrer bars. The cross section of each of a cooperating system of a feed channel, through passage of the slider and dispensing channel of a dispensing tip may be circular and slightly larger than the largest diameter of a stirrer bar to expected, so as to avoid so as to avoid the stirrer bars getting stuck on the one hand and tilting inside a channel or passage on the other hand. The slider would be dimensioned such that the length of the through passage or through passages in the slider exceeds the expected maximum stirrer length just by a small margin sufficient to avoid a stirrer bar blocking the movement of the slider inside the guide channel.

(2) The motion range of the slider may be limited between the first position and the second position such that the motion range equals the offset distance between the first feed channel and the respective dispensing channel of the dispensing tip associated with the first feed channel. The first position inside the guide channel in which the through passage is aligned with a feed channel and the second position inside the guide channel in which the through passage is aligned with a dispensing channel of a dispensing tip associated with said feed channel may thus be end positions of the motion range of the slider. The definition of a pair of mutually associated dispensing tip and dispensing channel may then be that the offset distance between the feed channel and the dispensing channel of the associated dispensing tip, measured along the longitudinal axis of the guide channel, equals the limited motion range of the slider. In a more specific aspect, the definition of a pair of mutually associated feed channel and dispensing tip may be that the feed channel and the dispensing channel of the dispensing tip associated with said feed channel may be selectively aligned with one and the same through passage of the slider when the slider is in the first end position or in the second end position, respectively. It may be provided that the slider is axially trapped inside the body by two end stops, wherein, in particular, when the slider is in a position in which the displacement of the slider is limited by an end stop, the slider is in one of the first position and second position.

(3) In further non-limiting examples, at least two feed channels are provided inside the body, wherein at least two of said at least two feed channels are arranged parallel to each other and offset with respect to each other along the axis of the guide channel. Said at least two of the feed channels are arranged in a common plane. It is understood that said at least two of the feed channels may comprise all feed channels provided inside the body, such that all feed channels provided inside the body may be parallel to each other and/or be arranged in a common plane, i.e., the axes of the feed channels extending in a common plane. The dispenser device of said examples further comprises a first dispensing tip associated with a first one out of said at least two feed channels and a second dispensing tip associated with a second one out of said at least two feed channels. The offset distance by which the dispensing channel of the second dispensing tip is offset from the second one out of said at least two feed channels equals the offset distance by which the dispensing channel of the first dispensing tip is offset from the first one out of said at least two feed channels. The slider comprises a first through passage which is aligned with the first feed channel when the slider is in the first position inside the guide channel and a second through passage which is aligned with the second feed channel when the slider is in the first position inside the guide channel. It may be provided that the slider comprises a through passage for each pair of a feed channel and the respective associated dispensing tip.

(4) An operator control configured to enable displacement of the slider inside the guide channel may be provided, in particular outside the body of the dispenser device.

(5) It may in aspects of the disclosure be provided that the slider is resiliently supported inside the guide channel, wherein the resilient support is configured such as to exert a bias force between the slider and an end stop limiting the axial motion range of the slider in one direction. For one instance, the resilient support may exert a bias force between an end stop feature of the body and an interacting end stop feature of the slider.

(6) In non-limiting exemplary embodiments, each of the feed channels having an associated dispenser tip may pass over, at its proximal end, into a pair of grooves arranged opposite to each other and being formed in walls of the bulk reservoir, said walls converging from an open side of the bulk reservoir towards the proximal end of the feed channel. The bulk reservoir thus may form a kind of funnel, in which it is intended that bulk object move into the grooves converging towards and in particular merging into a feed channel, and from there are guided into the respective feed channel.

(7) The bulk reservoir may further include a mobile frame which is slidably attached to the body of the dispenser device. In reciprocating the mobile frame, the bulk objects inside the bulk reservoir are agitated, and thus conveying single objects into the feed channels, or, in the embodiment above, into the grooves and from there into the feed channels, is supported. Agitating the bulk objects may be found particularly useful if the bulk objects are magnetic or otherwise cohesive objects, such as to temporarily weaken the cohesion between individual ones of the bulk objects and facilitating entry of individual objects into the feed channel or feed channels.

(8) In particular non-limiting examples, the mobile frame is slidable in a direction parallel to the axis of the guide channel.

(9) In particular embodiments, one of the walls of the bulk reservoir comprising the grooves may be fixed with respect to the body, or may be formed as a part of the body, and the other one of the walls of the bulk reservoir comprising the grooves may be part of the mobile frame forming part of the bulk reservoir and moveable relative to the body.

(10) In more specific aspects of the disclosed subject matter, one end of the at least one through passage of the slider, namely the proximal end which is intended to be positioned adjacent a feed channel, may be provided essentially funnel-shaped and widening towards said end of the at least one through passage and may further be provided with a smooth transition to the outer surface of the slider. Due to providing a shallow funnelling geometry and a smooth transition at said proximal end of the through passage, an object which is not fully contained inside the through passage, but projects partially into the through passage from a feed channel, and abuts another object contained inside the through passage, may be pushed back into the feed channel and out of the through passage when the slider is displaced in a lateral direction such that movement of the slider is not impeded by said projecting object.

(11) In non-limiting specific examples, the dispenser device may comprise at least two dispenser tips arranged in an array at an array pitch distributed along the axis of the guide channel. The array pitch is to be understood as a distance between two corresponding points of two neighbouring dispenser tips. The term implies that the dispenser tips are equidistantly distributed along a line parallel to the axis of the guide channel.

(12) As indicated above, the dispenser device may be intended, or adapted and configured, to dispense cylindrical objects like stirrer bars. More specifically, the dispenser device may be adapted and configured to dispense cylindrical objects of a maximum diameter and a maximum length from the bulk reservoir through the at least one dispenser tip. In said non-limiting embodiments, a diameter of the at least one feed channel, the at least one through passage of the slider and a dispensing passage of the at least one dispensing tip may be between 0% and 10%, more particularly between 0% and 5%, larger than the expected maximum diameter of the cylindrical objects, and the slider may be dimensioned such that the length of the at least one through passage of the slider is between 0% and 10% larger than the expected maximum length of the cylindrical objects.

(13) In this context, at least one through passage of the slider, and in more particular embodiments all through passages of the slider, may comprise a cylindrical section and a funnelling section, wherein the diameter of the at least one through passage of the slider is defined in the cylindrical section and the length of the cylindrical section is at most an expected minimum length of the cylindrical objects minus 5% of said expected minimum length. As mentioned above, said geometry serves to avoid a further cylindrical object projecting from the feed channel and abutting a cylindrical object contained in the cylindrical section of the through passage from impeding lateral displacement of the slider inside the guide channel.

(14) Further disclosed is a laboratory system comprising a tray configured for receiving and supporting sample containers, wherein the tray is configured to receive a number of sample containers arranged in one linear array and equidistantly at a sample pitch. It is understood that the tray may be configured to receive the sample containers in a two-dimensional array which in turn comprises a multitude of linear arrays, each configured to receive said number of sample containers. The laboratory system further comprises a dispenser device of any type outlined above. The dispenser device comprises a number of dispenser tips equal to the number of sample containers which can be arranged in the linear array on the tray. Each of the dispensing tips is associated with a feed channel, wherein the dispensing tips are arranged in an array equidistantly along the axis of the guide channel at a pitch equal to the sample pitch.

(15) Still further disclosed is a method of placing an object into a sample container. The method comprises placing the sample container upright with a filler opening on the top side and placing a dispenser device of any type outlined above with the at least one dispenser tip at the bottom and the bulk reservoir at the top. At least one object to be placed into the sample container is filled into the bulk reservoir of the dispenser device and the content of the bulk reservoir is subsequently agitated so as to forward at least one object into a feed channel. A distal end of a dispenser tip of the dispenser device is placed over or inside the filler opening of the sample container. The slider of the dispenser device is subsequently moved inside the guide channel so as to align a through passage of the slider with a feed channel. Hence, an object is gravitationally conveyed from the feed channel into the through passage. The slider is then displaced inside the guide channel to bring the through passage of the slider into alignment with the dispenser channel of the dispenser tip such that the object is gravitationally conveyed from the through passage of the slider through the dispenser channel into the sample container.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

The subject matter of the present disclosure is now to be explained in more detail by means of selected exemplary embodiments shown in the accompanying drawings. It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter. The figures show
- Fig. 1: a first view of a dispenser device as herein disclosed;
- Fig. 2: a sectional view of the dispenser device shown in figure 1 taken along line II-II;

- Fig. 3: an exploded view of the dispenser device shown in figure 1; and
- Fig. 4: A laboratory system comprising a sample tray and a dispenser device of the type described above.

### Description of embodiments

The herein disclosed subject matter and herein claimed invention as set forth in the claims shall now be explained by means of exemplary embodiments. The exemplary embodiments, however, are intended for instructional purposes only and are not intended to restrict the scope of the herein claimed invention beyond the limitations of the claims.

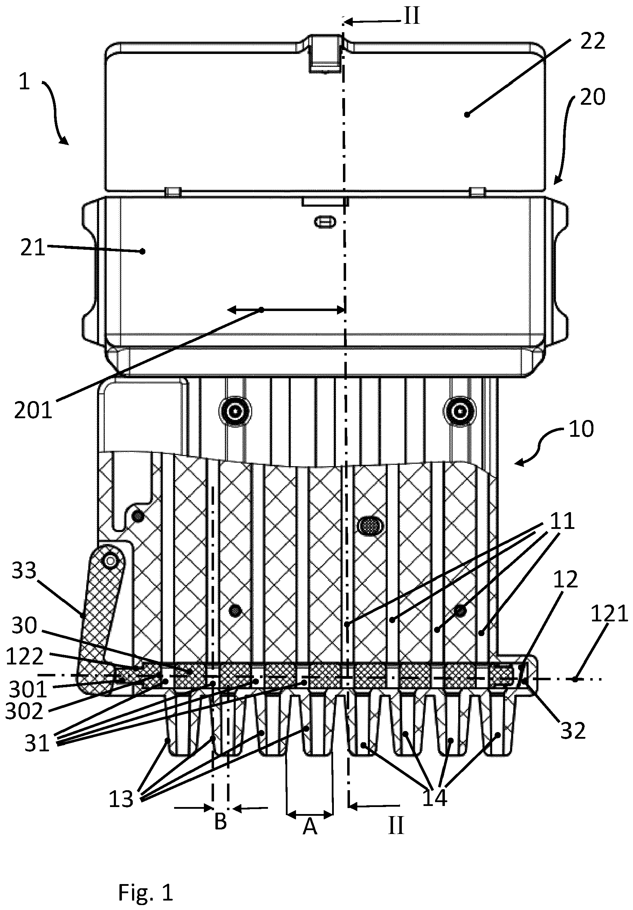

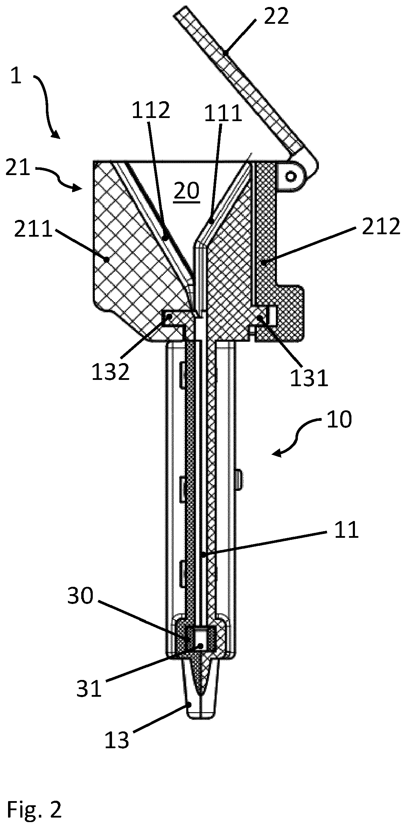

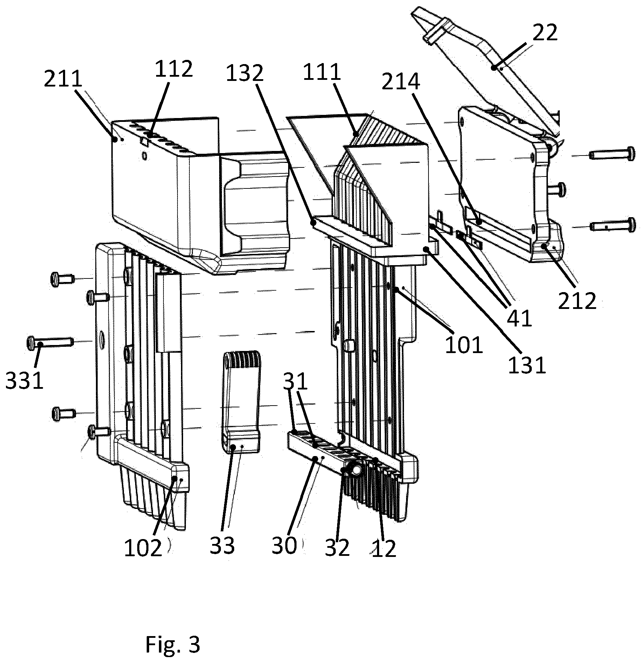

The merits of the herein described subject matter will become best appreciated by joint consideration of figures 1 and 2 and in further consideration of figure 3, wherein figure 2 shows a sectional view of the dispenser device 1 shown in figure 1 taken along line II-II in figure 1. Dispenser device 1 comprises body 10, which is connected to a bulk reservoir 20 on a proximal side thereof. A multitude of feed channels 11, only some of which are denoted by reference signs, are provided inside the body. As becomes apparent from a joint consideration of figures 1 and 2, each feed channel extends between bulk reservoir 20 and guide channel 12. Hence, each of feed channels opens, at its proximal end, into bulk reservoir 20 and, at its distal end, opens into guide channel 12. Guide channel 12 extends along a guide channel longitudinal axis 121 inside body 10. Guide channel 12 has a closed longitudinal end and an open longitudinal end through which slider 30 extends. Slider 30 is slidably received and guided within guide channel 12. Slider 30 thus can slide along axis 121 of guide channel 12 within a longitudinal motion range. Further, dispensing tips 13, only some of which are denoted by reference signs, extend from a distal side of body 10. Dispensing tips 13 are equidistantly arranged in an array at an array pitch A and distributed along axis 121 of guide channel 12. Each of the dispensing tips 13 comprises a dispensing channel 14. Each dispensing channel 14 is, in the shown embodiment, associated with a feed channel 11 and is laterally offset from the feed channel with which it is associated by an offset distance B. Generally, each associated pair of a feed channel 11 and a dispensing channel 14 are parallel to each other and moreover extend in a common plane, which common plane in particular is parallel to the axis 121 of guide channel 12, and more particularly includes axis 121 of guide channel 12. Moreover, a dispensing channel associated with a feed channel is the dispensing channel closest to the feed channel when measured along the longitudinal axis 121 of guide channel 12 in one direction. By virtue of the above, the distance between any two neighbouring feed channels in the present exemplary embodiment equals the array pitch A by which any two adjacent dispensing tips, or the dispensing channels thereof, respectively, are offset from each other along the axis 121 of guide channel 12. Slider 30 comprises through passages 31, wherein one through passage is provided for and extends parallel to each pair of associated feed channel 11 and dispensing channel 14. The motion range of slider 30 includes a first position, as depicted in figure 1, in which through passages 31 are aligned with the feed channels 11. The motion range is further provided such as to include a second position in which the through passages 31 are aligned with the dispensing channels 14. Said first and second positions of slider 30 may be end positions of the range of motion of slider 30. In aspects, a dispensing tip associated with a specific feed channel may generally be defined as a dispensing tip having a dispensing channel with which a through passage of the slider is aligned when the slider is in the second position, while the same through passage is aligned with the specific feed channel when the slider is in the first position. For one instance, slider 30 comprises a cross-sectionally smaller longitudinal end section 301 at its one end which extends from guide channel 12 and a cross-sectionally larger longitudinal section 302 received inside guide channel 12. The transition between these cross-sectionally differing longitudinal sections of slider 30 is provided by a shoulder, which is referred to as an end stop shoulder or abutment shoulder below, for reasons which will become immediately apparent to a skilled person by virtue of the following outline. At the open end of guide channel 12 an inwardly extending end stop rim or abutment rim 122 is provided which narrows the cross section of guide channel 12 in such a manner that cross-sectionally smaller end section 301 of slider 30 can pass through the residual opening, while cross-sectionally larger section 302 of slider 30 abuts end stop rim 30 when slider 30 is in the first position in which the through passages 31 are aligned with the feed channels 11. Thus, the motion range of slider 30 is in one direction, i.e., in the provided exemplary embodiment, in a direction out of the guide channel, limited at said first position. Likewise, a second end stop arrangement may be provided to limit the motion range of slider 30 in the other direction, i.e., in the provided exemplary embodiment, in a direction into of the guide channel, limited at the second position in which the through passages 31 are aligned with the dispensing channels 14. Through passages 31 are equidistantly arranged along a longitudinal extent of slider 30, wherein the offset distance between two neighbouring through passages 31 equals pitch A of the dispensing tips. Slider 30 is resiliently supported inside guide channel 12 by a resilient member 32. Said resilient member may be provided as a spring. An operator control is provided by a lever 33 pivotably mounted to body 10 and configured so as to enable an operator to exert a force onto slider 30 urging slider 30 towards the closed end of guide channel 12. Resilient member 32 is, in the present embodiment, interposed between an end of slider 30 and the closed end of guide channel 12. In the shown exemplary embodiment, resilient member 32 is configured to provide a resilient force urging the abutment shoulder of slider 30 to abut rim 122 when no external force is provided. Upon pressing lever 33, slider 30 is urged towards the closed end of guide channel 12, thereby compressing resilient member 32 until displacement of slider 30 is limited by the abutment of the second abutment arrangement at the above-mentioned second position in which the through passages 31 are aligned with the dispensing channels 14. Upon releasing operator control, or, in the present embodiment, lever, 33 the restoring force of resilient member 32 urges slider 30 back to the first position in which the through passages 31 are aligned with the feed channels 11.

Bulk reservoir 20 includes a mobile frame 21, which can be moved relative to body 10 essentially parallel to axis 112 of guide channel 12, as indicated by arrow 201 in figure 1. As best seen in figure 2, mobile frame 21 comprises two guide slots, on of which is designated with reference number 214 in figure 3, in which ledges 131 and 132 of body 10 are received and which guide movement of mobile frame 21. As also best seen in figure 3, lateral play on the ledges inside the guide slots is compensated for by spring plates 41 arranged between the ridge of ledge 131 and the ground of guide slot 214. Referring again to figure 2, the feed channels 11 at their proximal ends pass over into a pair of grooves 111 and 112, which are formed in opposing walls of bulk reservoir 20. Said walls converge from an open side of bulk reservoir 20 towards the proximal end of feed channels 11 and thus form a funnel-like arrangement funneling towards the feed channels 11. The wall comprising grooves 111 is fixed with respect to, or, more specifically, in the present example, forms part of body 10, while the wall comprising grooves 112 is provided on member 211 of mobile frame 21. Grooves 111 extent parallel to and are aligned with feed channels 11 in a first stretch adjacent the proximal ends of feed channels 11, and, in the present embodiment, are angled to diverge from the center of bulk reservoir 20 distant from the proximal ends of feed channels 11. In other words, the wall which comprises grooves 111 is parallel and aligned with the feed channels in a first section adjacent the proximal ends of the feed channels and is sloped, or angled with respect to the feed channels, in a second section distant from the proximal ends of the feed channels. Grooves 112 are entirely provided on a sloped wall which is angled with respect to the feed channels, and abut the first section of the wall comprising grooves 111, or, in other words, abut the section of said wall which is parallel to feed channels 11. In embodiments, grooves 111 have a constant cross-sectional dimension, and/or constant cross-sectional shape along their longitudinal extent. Said shape and/or dimension may be adapted and configured to provide a transition from grooves 111 into feed channels 11 which is as free of cross-sectional changes as possible. Said transition shall enable objects having a cross-sectional size and shape to fit into feed channels 11 to unobstructedly slide from grooves 111 into feed channels 11. Depending on the position of mobile frame 21 relative to body 10 along the axis 121 of guide channel 12, grooves 112 may or may not merge into grooves 111. The depth, and, in embodiment, width of grooves 112 tapers at the end abutting the wall comprising grooves 111, and towards the respective outlet of grooves 112.

Bulk objects contained in bulk reservoir 20 are agitated upon a reciprocating movement, as indicated at 201 in figure 1, of mobile frame 21. Thus, when dispensing device 1 is held with dispensing tip 13 towards the bottom and bulk reservoir 20 towards the top, individual objects thus are separated from the bulk and conveyed into grooves 111 and 112. From there, said objects are gravitationally conveyed into feed channels 11 and to the distal ends of feed channels 11. Reference now is again made to figure 1. If, in the exemplary embodiment, lever 33 is not actuated, slider 30 is in the first position, as depicted in figure 1, in which the through passages 31 are aligned with the feed channels 11. Objects from feed channels 11 are thus gravitationally conveyed into through passages 31 of slider 30. Upon pressing lever, or, more generally speaking, operator control, 33, slider 30 is displaced inside guide channel 12 and into the second position in which the through passages 31 are aligned with the dispensing channels 14. Hence, the objects contained inside through passages 31 are gravitationally conveyed into and through, and actually fall through and out of, dispensing channels 14 and are thus dispensed through dispensing tips 13. Upon releasing lever 33, slider 30 returns into the first position in which the through passages 31 are aligned with the feed channels 11. Through passages 31 are thus replenished with objects, which may, by again actuating lever 33, be dispensed from dispensing tips 13 through dispensing ducts 14. In repeatedly actuating and releasing lever 33, objects from bulk reservoir may be dispensed. It may be required to reciprocatedly move mobile frame 21 to replenish feed channels 11 from bulk reservoir 20. Lever 33 and mobile frame 21 can be actuated even with gloves. It is thus largely facilitated to dispense and place small objects like magnetic stirrer bars for instance in a glovebox or in other environments in which the operator is required to wear gloves or a protective suit.

The skilled person will readily appreciate that the cross section of the feed channels 11, the through passages 31 and the dispensing channels 14 need to be adapted to the size and type of objects to be dispensed. Also, the size of the slider, which in turn governs the length of the through passages, might need to be adapted to the size and type of objects to be dispensed. In embodiments, the feed channels 11, the through passages 31 and the dispensing channels 14 might all have at least approximately the same cross-sectional geometry and size. They may more in particular all be circular in cross section. Such adaption is within the of a skilled person's common scope of activities. For one instance for dispensing stirrer bars the feed channels 11, the through passages 31 and the dispensing channels 14 may have circular cross sections and the diameter may be up to 5% or 10% larger than the largest expected diameter of a stirrer bar. The length of the through passages 31 of slider 30 may be about, and slightly larger than, for instance by up to 5 % or 10%, the expected maximum length of a stirrer bar. The end areas of the through passages 31 of slider 30 may be shaped such as to displace bars extending from a feed channel into a through passage and abutting a bar contained inside the through passage back into the feed channel when the slider is displaced along the axis 121 of guide channel 12.

The bulk reservoir is provided with a lid 22 which is hingedly attached to the mobile frame 21.

Figure 3 shows an exploded view of dispenser device 1 of figures 1 and 2. Body 10 of dispenser device 1 is assembled from two members 101 and 102, thus enabling installing slider 31 inside the body in an axially trapped manner, as outlined above. Lever 30 is also installed between the two body members and pivotedly mounted by hinge pin 331. The body members or body halves101, 102 are assembled by means of screws, pins or other suitable means, which are not provided with reference signs. Mobile frame 21 of bulk reservoir 20 is assembled from frame members 211 and 212. Frame member 211 comprises the sloped wall of bulk reservoir 20 which comprises grooves 112. Both frame members are provided with guide slots, of which only guide slot 214 of frame member 212 is visible, to receive ledges 131 and 132 of the body. The length of the guide slots parallel to the axis of guide channel 12 exceeds the length of the respective ledge to be received, also measured parallel to the axis 121 of guide channel 12, so as to enable an transitional degree of freedom of the mobile frame relative to the body. The mobile frame is assembled encompassing the proximal section of the body. Elastic elements 41 are installed inside guide slot 214 between the ridge of ledge 131 and the ground of guide slot 214. Elastic elements 41 serve to bias mobile frame 21 relative to body 10, such that the inner walls of the bulk reservoir, i.e., the walls comprising grooves 111 and 112, are tightly biased against each other.

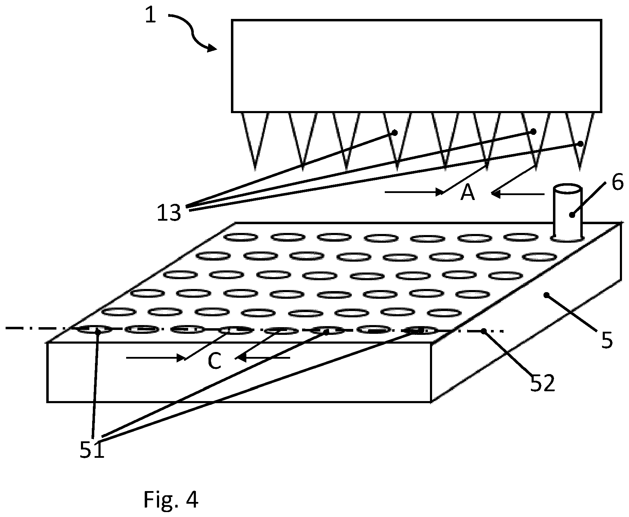

Figure 4 shows a laboratory system comprising a tray 5 configured for receiving and supporting sample containers. One sample container 6 is exemplarily shown in the figure. The tray 5 comprises receiving openings 51 in a top side for receiving sample containers 6 therein. The receiving openings are arranged in a two-dimensional array comprising multiple linear arrays, one of which is indicated at 52. A number of, in the present example eight, receiving openings are arranged in one linear array and equidistantly at a sample pitch C. The laboratory system further comprises a dispenser device 1. The dispenser device may generally be a dispenser device of any type outlined above. The dispenser device comprises a number of dispenser tips 13 equal to the number of sample containers intended to be arranged in the linear array on the tray, which, in the present example, is eight. The dispensing tips 13 are arranged in an array equidistantly along the axis of the guide channel at a pitch A equal to the sample pitch C. It is thus possible to place each dispensing tip 13 over or in each sample container placed on tray 5 along a linear array, such as, for instance, indicated at 52 in figure 4, and hence to dispense an object into each of said sample container in one step.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### Reference signs list

- 1: dispenser device
- 5: tray
- 6: Sample container
- 10: body of dispenser device
- 11: feed channel
- 12: guide channel
- 13: dispensing tip
- 14: dispensing channel
- 20: bulk reservoir
- 21: mobile frame of bulk reservoir
- 22: lid
- 30: slider
- 31: through passage of slider
- 32: resilient member
- 33: operator control; lever
- 41: elastic element, spring plate
- 51: receiving opening of the tray
- 52: linear array of sample openings on the tray
- 101: member of the body of the dispenser device
- 102: member of the body of the dispenser device
- 111: grooves
- 112: grooves
- 121: longitudinal axis of guide channel
- 122: abutment rim
- 131: ledge
- 132: ledge
- 201: possible movement of the mobile frame of bulk reservoir
- 211: member of the mobile frame of bulk reservoir
- 212: member of the mobile frame of bulk reservoir
- 214: guide slot
- 301: end section of the slider
- 302: longitudinal section of the slider
- 331: hinge pin
- A: pitch of dispensing tips
- B: offset distance between a feed channel and an associated dispensing channel
- C: sample pitch

## Claims

1. Dispenser device (1), comprising a body (10), wherein at least one feed channel (11) is provided inside the body, the at least one feed channel having a proximal end and a distal end, wherein the proximal end opens into a bulk reservoir (20) which is provided on a proximal side of the dispenser device and wherein the distal end opens into a guide channel (12), which guide channel has an axis (121) extending transversely with respect to the at least one feed channel,
the dispenser device further comprising at least one dispensing tip (13) extending from a distal side of the body (10), wherein the at least one dispensing tip has a dispensing channel (14) extending at least essentially parallel to a feed channel (11) and laterally offset from each feed channel along the axis (121) of the guide channel (12), wherein the dispensing channel (14) opens into the guide channel (12) and is open at a distal end of the dispensing tip (13),
wherein at least one dispensing tip (13) is associated with a feed channel, wherein the dispensing channel (14) of each associated dispensing tip extends parallel to and is laterally offset from the respective feed channel (11) along the axis (121) of the guide channel (12) by an offset distance (B),
wherein further a slider (30) is slidably received inside and guided by the guide channel (12), wherein the slider comprises at least one through passage (31), wherein a first through passage is parallel to a first feed channel and to the dispensing channel of a first dispensing tip associated with the first feed channel, and the slider being configured to allow a sliding movement along the axis of the guide channel in a motion range including a first position inside the guide channel in which the first through passage is aligned with said first feed channel and a second position inside the guide channel in which the first through passage is aligned with the first dispensing channel.

2. The dispenser device according to the preceding claim, wherein the motion range of the slider is limited between the first position and the second position such that the motion range equals the offset distance between the first feed channel and the dispensing channel of the dispensing channel associated with the first feed channel.

3. The dispenser device according to any preceding claim, wherein at least two feed channels (11) are provided inside the body (10), wherein at least two of said feed channels are arranged parallel to each other and offset with respect to each other along the axis (121) of the guide channel (12) such that said at least two of the feed channels are arranged in a common plane, wherein the dispenser device (1) comprises a first dispensing tip (13) associated with a first one out of said at least two feed channels and a second dispensing tip associated with a second one out of said at least two feed channels (11), wherein the offset distance (B) by which the dispensing channel of the second dispensing tip associated with the second one out of said at least two feed channels is offset from the second one out of said at least two feed channels equals the offset distance by which the dispensing channel of the first dispensing tip associated with the first one out of said at least two feed channels is offset from the first one out of said at least two feed channels, wherein the slider comprises a first through passage which is aligned with the first feed channel when the slider is in the first position inside the guide channel and a second though duct which is aligned with the second feed channel when the slider is in the first position inside the guide channel.

4. The dispenser device according to any preceding claim comprising an operator control configured to enable displacement of the slider inside the guide channel.

5. The dispenser device according to any preceding claim, wherein the slider is resiliently supported inside the guide channel (12), wherein the resilient support (32) is configured such that as to exert a bias force between the slider (30) and an end abutment (122) limiting the axial motion range of the slider in one direction.

6. The dispenser device according to any preceding claim, wherein each of the feed channels (11) having a respective associated dispenser tip (13) passes, at its proximal end, over into a pair of grooves (111, 112) arranged opposite to each other and being formed in walls of the bulk reservoir (20), said walls converging from an open side of the bulk reservoir towards the proximal end of the feed channel.

7. The dispenser device according to any preceding claim, wherein the bulk reservoir (20) includes a mobile frame (21) which is slidably attached to the body (10) of the dispenser device.

8. The dispenser device according to the preceding claim, wherein the mobile frame (21) is slidable in a direction (201) parallel to the axis (121) of the guide channel (12).

9. The dispenser device according to a combination of the two preceding claims, wherein one of the walls of the bulk reservoir (20) comprising the grooves (111) is fixed with respect to the body and the other one of the walls of the bulk reservoir comprising the grooves (112) is part of the mobile frame (21).

10. The dispenser device according to any of the preceding claims, wherein a proximal end of the at least one through passage (31) of the slider (30) intended to be positioned adjacent a feed channel (11) is provided essentially funnel-shaped and widening towards said proximal end of the at least one through passage and is further provided with a smooth transition to the outer surface of the slider.

11. The dispenser device according to any preceding claim, wherein the dispenser device comprises at least two dispenser tips (13) arranged in an array at an array pitch (A) distributed along the axis (121) of the guide channel (12).

12. The dispenser device according to any of the preceding claims, wherein the dispenser device (1) is adapted and configured to dispense cylindrical objects of a maximum diameter and a maximum length from the bulk reservoir (20) through the at least one dispenser tip (13), wherein a diameter of the at least one feed channel (11), the at least one through passage (31) of the slider (30) and a dispensing passage (14) of the at least one dispensing tip (13) is between 0% and 5% larger than the expected maximum diameter of the cylindrical objects and the slider (30) is dimensioned such that the length of the at least one through passage (31) of the slider is between 0% and 10% larger than the expected maximum length of the cylindrical objects.

13. The dispenser device according to the preceding claim, wherein the at least one through passage (31) of the slider (30) has a cylindrical section and a funnelling section, wherein the diameter of the at least one through passage of the slider is defined in the cylindrical section and the length of the cylindrical section is at most a expected minimum length of the cylindrical objects minus 5% of said expected minimum length.

14. A laboratory system comprising a tray (5) configured for receiving and supporting sample containers (6), wherein the tray is configured to receive a number of sample containers arranged in one linear array (52) and equidistantly at a sample pitch (C) and further comprising a dispenser device (1) according to any preceding claim, wherein the dispenser device comprises a number of dispenser tips (13) equal to the number of sample containers which can be arranged in the linear array (52) on the tray, each of the dispensing tips being associated with a feed channel, wherein the dispensing tips are arranged in an array equidistantly along the axis of the guide channel at a pitch (A) equal to the sample pitch (C).

15. A method of placing an object into a sample container (6), the method comprising placing the sample container upright with a filler opening on the top side, placing a dispenser device (1) according to any of the preceding claims claiming a dispenser device with the at least one dispenser tip (13) at the bottom and the bulk reservoir (20) at the top, filling at least one object to be placed into the sample container (6) into the bulk reservoir (20) of the dispenser device (1) , agitating the content of the bulk reservoir so as to forward at least one object into a feed channel (11) of the dispenser device (1), placing a distal end of a dispenser tip (13) of the dispenser device over or inside the filler opening of the sample container (6), moving the slider (30) of the dispenser device inside the guide channel so as to align a through passage (31) of the slider (30) with a feed channel (11) of the dispenser device such that an object is gravitationally conveyed from the feed channel into the through passage, and displacing the slider (30) inside the guide channel to bring the through passage (31) of the slider into alignment with the dispenser channel (14) of the dispenser tip (13) such that the object is gravitationally conveyed from the through passage (31) of the slider through the dispenser channel (14) into the sample container (6).
